# EUROPÄISCHE PATENTSCHRIFT

(11) **EP 2 311 116 B1**
(45) Veröffentlichungstag und Bekanntmachung des Hinweises auf die Patenterteilung: **10.09.2014**
(21) Anmeldenummer: 09777043.2
(22) Anmeldetag: 08.07.2009
(51) Int. Cl.: H01M 2/02, H01M 2/06, H01M 4/66, H01M 10/052

(54) **STROMABLEITER FÜR EINE GALVANISCHE ZELLE**
CURRENT COLLECTOR FOR AN ELECTROCHEMICAL CELL
COLLECTEUR DE COURANT POUR UNE CELLULE GALVANIQUE

(30) Priorität: 09.07.2008 DE 102008032270; 17.11.2008 DE 102008057711
(43) Veröffentlichungstag der Anmeldung: 20.04.2011
(73) Patentinhaber: Li-Tec Battery GmbH, 01917 Kamenz (DE)
(72) Erfinder: KAISER, Jörg, 01917 Kamenz (DE); HOHENTHANNER, Claus- Rupert, 63457 Hanau (DE); EICHINGER, Günter, 63674 Altenstadt (DE); SCHÖNE, Heike, 01920 Elstra (DE); SCHÄFER, Beatrice, 01307 Dresden (DE); POLYAKOV, Mykola, 18146 Rostock (DE); SCHÄFER, Tim, 99768 Harztor (DE)
(74) Vertreter: Wallinger, Michael
(86) Internationale Anmeldenummer: PCT/EP2009/004946
(87) Internationale Veröffentlichungsnummer: WO 2010/003662

(56) Entgegenhaltungen:
- WO-A-00/01021
- WO-A-03/069700
- DE-A1- 19 608 326
- US-A1- 2008 138 716
- DAVID R.LIDE: "CRC Handbook of Chemistry and Physics, 89th Edition, 2008-2009" 10. September 2009 (2009-09-10), , XP002545308 Seiten 12-39 - Seiten 12-40 Seiten 12-44

## Beschreibung

Die vorliegende Erfindung betrifft einen Stromableiter für eine galvanische Zelle sowie eine galvanische Zelle mit einem solchem Stromableiter. Die Erfindung wird in Bezug auf wiederaufladbare galvanische Zellen beschrieben, deren Elektrolyt Lithium-Ionen aufweist. Die Erfindung kann auch im Zusammenhang mit galvanischen Zellen für nur einmaligen Gebrauch und/oder unter Verwendung anderer Elektrolyte Anwendung finden.

Aus dem Stand der Technik, z.B. aus WO 03/069700 A2 sind wiederaufladbare galvanische Zellen verschiedener Bauarten bekannt. Einigen dieser Bauarten ist gemein, dass deren Betriebssicherheit mit fortschreitender Nutzungsdauer sinkt.

Der vorliegenden Erfindung liegt die Aufgabe zugrunde, die Sicherheit solcher galvanischer Zellen zu erhöhen. Dies wird erfindungsgemäß durch eine galvanische Zelle gemäß Anspruch 1 erreicht. Vorteilhafte Ausführungsformen und Weiterbildungen sind Gegenstand der Unteransprüche.

Der Stromableiter einer erfindungsgemäßen galvanischen Zelle weist wenigstens einen im wesentlichen plattenförmigen und vorzugsweise dünnwandigen Kernbereich auf. Dieser Kernbereich beinhaltet wenigstens einen elektrisch leitfähigen dritten Werkstoff. Der Stromableiter weist weiter einen ersten Oberflächenbereich mit wenigstens einem ersten Werkstoff auf. Ferner weist der Stromableiter einen zweiten Oberflächenbereich mit wenigstens einem zweiten Werkstoff auf. Die elektrische Leitfähigkeit des ersten Oberflächenbereichs ist dabei geringer, als die des zweiten Oberflächenbereichs. Weiter ist dieser erste Oberflächenbereich von diesem zweiten Oberflächenbereich abgegrenzt bzw. räumlich getrennt.

Bei dem Stromableiter einer erfindungsgemäßen galvanischen Zelle handelt es sich um einen Festkörper, welcher zur Leitung elektrischen Stroms im Zusammenhang mit galvanischen Zellen vorgesehen ist. Der Stromableiter dient auch der elektrischen Verbindung mit einem Anschlussmittel, beispielsweise einem Anschlusskabel. Der Stromableiter ist im wesentlichen plattenförmig bzw. quaderförmig. Er weist wenigstens zwei rechteckige und im Wesentlichen parallele Mantelflächen auf, welche voneinander beabstandet angeordnet sind. Der Stromableiter ist vorzugsweise massiv ausgebildet und von geringer Wandstärke. Dabei ist eine mindeste Wandstärke des Stromableiters auch abhängig von der elektrischen Leitfähigkeit des dritten Werkstoffs, der Breite des Stromableiters rechtwinklig zur Flussrichtung des elektrischen Stroms und dessen Stromstärke zu wählen.

Der Stromableiter leitet elektrischen Strom durch seinen Kernbereich bzw. dessen Begrenzungsflächen. Dazu weist dieser Kernbereich zumindest einen elektrisch leitenden dritten Werkstoff auf. Der Gewichtsanteil des dritten Werkstoffs wird aus dem Verhältnis von Gewicht des dritten Werkstoffs zu Gewicht des Kernbereichs bestimmt. Dieser Gewichtsanteil wird in Abhängigkeit von den auftretenden Strömen bzw. deren Stromstärke, den Abmessungen des Stromableiters und von der elektrischen Leitfähigkeit des dritten Werkstoffs gewählt.

Weiter ist dem Stromableiter wenigstens ein erster Oberflächenbereich mit einem ersten Werkstoff zugeordnet. Der erste Oberflächenbereich ist auf wenigstens einer Mantelfläche des Stromableiters angeordnet und bedeckt diese wenigstens teilweise. Der erste Werkstoff ist verschieden vom dritten Werkstoff. Weiter ist dem Stromableiter wenigstens ein zweiter Oberflächenbereich mit einem zweiten Werkstoffs zugeordnet. Der zweite Oberflächenbereich ist auf wenigstens einer Mantelfläche des Stromableiters angeordnet und bedeckt diese wenigstens teilweise. Dieser zweite Oberflächenbereich ist verschieden vom ersten Oberflächenbereich. Ebenso ist der zweite Werkstoff verschieden vom ersten und vom dritten Werkstoff. Der zweite Oberflächenbereich weist eine höhere elektrische Leitfähigkeit als der erste Oberflächenbereich auf.

Der erste und der zweite Oberflächenbereich des Stromableiters sind voneinander abgegrenzt. Darunter ist zu verstehen, dass es zwischen diesen beiden Oberflächenbereichen keinen allmählichen Übergang unter Berücksichtigung der technischen Möglichkeiten der Herstellung gibt. Ein solcher Übergangsbereich wäre herstellungsbedingt aber nicht erfindungsgemäß. Durchaus können diese beiden Oberflächenbereiche einander berühren.

Eine erfindungsgemäße galvanische Zelle weist wenigstens eine Elektrode, einen Elektrolyt und eine Umhüllung auf. Dabei weist die Elektrode wenigstens eine aktive Elektrodenmasse und einen vorgenannten Stromableiter auf. Der Stromableiter steht wenigstens in elektrischem Kontakt mit der aktiven Elektrodenmasse. Die Umhüllung ist wenigstens teilweise mit dem ersten Oberflächenbereich des Stromableiters verbunden. Vorzugsweise ist diese Verbindung stoffschlüssig ausgebildet. Beispielsweise ist die Verbindung durch Kleben oder Schweißen erzeugt.

Ein Elektrolyt ermöglicht die Leitung von Ionen zwischen vorhandenen Elektroden bzw. deren aktiven Elektrodenmassen in einer galvanischen Zelle. Dieser Elektrolyt weist wenigstens Lithium-Ionen auf.

Eine aktive Elektrodenmasse speichert Energie in chemischer Form. Die aktive Elektrodenmasse gibt Ionen an den Elektrolyt ab oder empfängt Ionen vom Elektrolyt. Die aktive Elektrodenmasse empfängt Elektronen vom Stromableiter bzw. dessen Kernbereich oder gibt Elektronen an den Stromableiter bzw. dessen Kernbereich ab. Die Richtung der Teilchenbewegungen hängt davon ab, ob die galvanische Zelle entladen oder geladen wird.

Die Umhüllung umschließt die galvanische Zelle gasdicht. Vorzugsweise ist die Umhüllung als gasdichte Folie ausgebildet. Die Umhüllung ist an die Gestalt des Stromableiters angepasst.

Eine vorgenannte galvanische Zelle weist Lithium bzw. Lithium-Ionen auf. Sofern Wasser in das Innere einer solchen galvanischen Zelle eintritt, kann es mit dem vorhandenen Lithium zu einer heftigen chemischen Reaktion kommen. Eine derart veränderte galvanische Zelle kann auch explodieren. Bei erfindungsgemäßer Ausbildung des Stromableiters bzw. der galvanischen Zelle ist die Verbindung zwischen der Umhüllung und dem ersten Oberflächenbereich des Stromableiters geeignet, diesen unerwünschten Zutritt von Wasser zu unterbinden bzw. merklich zu verringern. So wird die Sicherheit solcher galvanischer Zellen erhöht und die zugrundeliegende Aufgabe gelöst.

Weiter vorteilhafte Ausgestaltungen der vorliegenden Erfindung sind nachfolgend beschrieben.

Vorteilhaft ist dieser zweite Werkstoff ein Metall, vorzugsweise Nickel, Gold, Platin oder ein anderes Edelmetall. Der zweite Werkstoff soll während des Betriebs des Stromableiters insbesondere chemischen Angriffen besser widerstehen, als der dritte Werkstoff. So soll insbesondere die elektrische Kontaktierung mit einer Anschlusseinrichtung dauerhaften verbessert werden.

Bevorzugt sind der erste Oberflächenbereich und der zweite Oberflächenbereich als dünne Schichten ausgebildet. Im Vergleich zur Dicke des Kernbereichs sind diese Schichten dünner ausgebildet. Vorzugsweise betragen die Schichtdicken des ersten bzw. zweiten Oberflächenbereichs weniger als 1/10 der Dicke des Kernbereichs. Es ist nicht erforderlich, dass die Schichten des ersten und zweiten Oberflächenbereichs eine Mantelfläche des Stromableiters gänzlich bedecken. Beispielsweise sind die Schichten als streifenförmiges oder gepunktetes Muster auf einer Manteloberfläche ausgebildet.

Vorteilhaft ist der dritte Werkstoff des Kernbereichs elektrisch leitend, vorzugsweise ein Metall. Bevorzugt handelt es sich bei diesem dritten Werkstoff um Aluminium und/oder Kupfer. Dabei beträgt der Gewichtsanteil dieses dritten Werkstoffs am Gesamtgewicht des Kernbereichs wenigstens 20 Gewichtsprozent, bevorzugt wenigstens 50 Gewichtsprozent, bevorzugt wenigstens 90 Gewichtsprozent, besonders bevorzugt wenigstens 95 Gewichtsprozent oder besonders bevorzugt wenigstens 99,5 Gewichtsprozent und bevorzugt höchstens 99,995 Gew.-%.

Vorteilhaft handelt es sich bei dem zweiten Werkstoff um einen elektrisch leitenden Werkstoff, vorzugsweise ein Metall. Vorzugsweise handelt es sich bei diesem zweiten Werkstoff um Nickel, wobei der Gewichtsanteil des zweiten Werkstoffs am Gesamtgewicht des zweiten Oberflächenbereichs wenigstens 20 Gewichtsprozent, bevorzugt wenigstens 50 Gewichtsprozent, besonders bevorzugt wenigstens 90 Gewichtsprozent, besonders bevorzugt wenigstens 95 Gewichtsprozent, besonders bevorzugt wenigstens 99,5 Gewichtsprozent und bevorzugt höchstens 99,995 Gew.-% beträgt.

Erfindungsgemäß ist der erste Werkstoff aus einer Gruppe gewählt, welche chemische Verbindungen unter Beteiligung von Silizium und/oder Zirkonfluorid umfasst. Diese Gruppe ist nicht abschließend. Auch sind als erster Werkstoff Gemische von wenigstens zwei der Stoffe dieser Gruppe möglich.

Vorzugsweise weist der Stromableiter weiter wenigstens einen Kontaktbereich auf. Ein Kontaktbereich ist als Teil einer Mantelfläche des Stromableiters ausgebildet. Der Kontaktbereich ist vorgesehen, Elektronen den Zutritt in den Stromableiter bzw. dessen Kernbereich zu ermöglichen. Auch ist der Kontaktbereich vorgesehen, Elektronen den Austritt aus dem Stromableiter bzw. dessen Kernbereich zu gestatten.

Vorteilhaft ist ein Kontaktbereich des Stromableiters auch zur Berührung und zum elektrischen Kontakt mit der aktiven Elektrodenmasse vorgesehen. Die aktive Elektrodenmasse ist auf wenigstens einen Kontaktbereich aufgetragen und mit diesem wenigstens elektrisch leitend verbunden. Dabei leitet der Kernbereich des Stromableiters Elektronen aus der aktiven Elektrodenmasse durch einen Kontaktbereich in Richtung des zweiten Oberflächenbereichs. Dort werden die Elektroden beispielsweise in ein Kabel geleitet. Dieses Kabel führt zum Verbraucher. Der Fluss von Elektronen erfolgt bei Bedarf auch in umgekehrter Richtung. Je nach Bauart können auch mehrere Kontaktbereiche des Stromableiters mit aktiven Elektrodenmassen versehen und elektrisch leitend verbunden sein. Beispielsweise ist die aktive Elektrodenmasse pastenförmig und auf einen folienartigen Stomableiter aufgetragen.

Erfindungsgemäß ist die Umhüllung als dünne Folie ausgebildet. Dabei weist die H Umhüllung wenigstens eine erste Schicht auf. Diese Schicht ist gasdicht und besonders bevorzugt metallisch ausgebildet. Insbesondere bei einer metallischen ersten Schicht ist es von Vorteil, wenn diese elektrisch gegenüber der galvanischen Zelle isoliert und vor chemischen Einfluss durch den Elektrolyt geschützt ist. Erfindungsgemäß ist die erste Schicht auf der Innenseite und/oder der Außenseite der Umhüllung wenigstens teilweise beschichtet. Diese Beschichtung weist wenigstens einen vierten Werkstoff auf, welcher elektrisch nicht leitend ist und eine dichte Beschichtung der Umhüllung bildet. Vorzugsweise handelt es sich bei diesem vierten Werkstoff um ein Polymer, besonders bevorzugt, um Polyethylen und/oder Polypropylen. Vorzugsweise weist diese erste Schicht auf ihrer Außenseite weiter eine Schutzschicht auf. Diese Schutzschicht dient zum Schutz der ersten Schicht gegenüber beispielsweise spitzen Fremdkörpern und/oder zur zusätzlichen Abdichtung der galvanischen Zelle. Die Umhüllung ist an die Gestalt des Stromableiters angepasst.

Ein Bereich der Umhüllung befindet sich nach Einsetzen der Stromableiter in der Nähe des ersten Oberflächenbereichs des Stromableiters. Hier erfolgt die bevorzugte stoffschlüssige Verbindung zwischen der Umhüllung und dem Stromableiter bzw. dem ersten Oberflächenbereich. Zur Haftverbesserung weist der vierte Werkstoff in der Nähe des ersten Oberflächenbereichs des Stromableiters polare Gruppen auf. Dabei handelt es sich vorzugsweise um Kohlenstoff-Sauerstoff-Gruppen. Es sind jedoch auch andere polare Gruppen oder andere die Haftung fördernde chemische Gruppen geeignet.

Vorteilhaft erstreckt sich der Stromableiter wenigstens teilweise aus der Umhüllung. Der sich aus der Umhüllung erstreckende Teil des Stromableiters dient zur Verbindung der Elektrode beispielsweise mit einem elektrischen Kabel. Vorzugsweise erstreckt sich der zweite Oberflächenbereich aus der Umhüllung. Vorteilhaft weist der zweite Oberflächenbereich einen elektrisch leitfähigen zweiten Werkstoff auf.

Üblicherweise wird eine galvanische Zelle gemeinsam mit weiteren galvanischen Zellen betrieben. Vorteilhaft ist die äußere Form der galvanischen Zelle an eine weitere galvanische Zelle angepasst. Vorzugsweise ist die äußere Form der galvanischen Zelle dabei im Wesentlichen quaderförmig. So wird ungenutzter Raum zwischen galvanischen Zellen vermieden. Dabei ist der Kernbereich des Stromableiters vorteilhaft an die äußere Form dieser galvanischen Zelle angepasst. Vorzugsweise ist dieser Stromableiter im Wesentlichen quaderförmig. Vorzugsweise ist die Umhüllung an die Gestalt des Stromableiters angepasst. So wird ungenutzter Raum vermieden und Material für die Umhüllung gespart. Beispielsweise ist die Umhüllung als rechteckige an drei Kanten geschlossene Tasche ausgebildet. Durch die vierte offene Kante wird die galvanische Zelle in die Umhüllung geschoben. Durch einen geeigneten Zuschnitt der Umhüllung wird auch die Bildung von Falten vermieden. Solche Falten altern schneller und können zu Brüchen der Umhüllung führen.

Abhängig von der Anwendung ist die äußere Form der galvanischen Zelle im Wesentlichen zylindrisch. Bei dieser Bauart sind die Bestandteile der galvanischen Zelle spiralförmig aufgewickelt. So ist auch der Stromableiter als dünne Folie bandförmig ausgebildet und spiralförmig aufgewickelt. Auch die Umhüllung ist an die Gestalt des Stromableiters bzw. der galvanischen Zelle angepasst.

Vorzugsweise weist der Elektrolyt der galvanischen Zelle wenigstens zeitweise ein Alkalimetall bzw. dessen Ionen auf. Besonders bevorzugt handelt es sich bei diesem Alkalimetall um Lithium. Bei dieser Ausbildung werden besonders hohe Energie und Leistungsdichten erreicht.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: eine Seitenansicht eines erfindungsgemäßen Stromableiters,
- Fig. 2: eine Schnittdarstellung einer galvanischen Zelle mit erfindungsgemäßen Stromableitern.

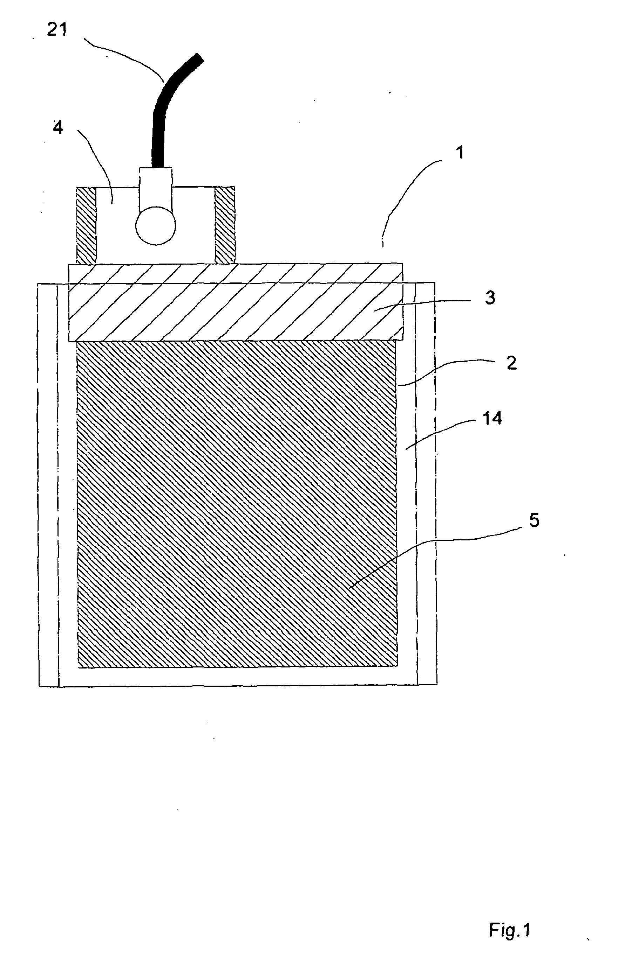

Fig.1 zeigt einen erfindungsgemäßen Stromableiter 1. Dieser ist von einer Umhüllung 14 umgeben und mit einem Stromkabel 21 verbunden. Die Umhüllung 14 ist zur Verdeutlichung des Aufbaus durchsichtig dargestellt. Die Darstellung ist nicht maßstabsgetreu.

Diese Ausführung des Stromableiters 1 weist einen Kernbereich 2, einen ersten Oberflächenbereich 3, einen zweiten Oberflächenbereich 4 und einen Kontaktbereich 5 auf. Der Kernbereich 2 ist als rechteckige Aluminiumfolie ausgebildet. Der Stromableiter 1 ist an seinem oberen Ende um eine rechteckige Fläche geringerer Breite ergänzt (gleiche Schrafur). Diese Fläche ist angeformt und trägt den zweiten Oberflächenbereich 4. Dieser ist als dünne Nickelschicht ausgebildet. Die Nickelschicht kann beispielsweise durch elektrolytische Abscheidung, durch Aufwalzen einer Nickelfolie oder durch Abscheidung aus einer Dampfphase erzeugt werden. Vorteilhaft ist der zweite Oberflächenbereich als dünne Goldschicht ausgebildet. Der erste Oberflächenbereich 3 ist als dünne Schicht aus Aluminiumoxiden aufgebaut. Diese Aluminiumoxidschicht ist beispielsweise durch Chromatierung oder Eloxierung erzeugt. Ein derart ausgebildeter Oberflächenbereich 3 verbessert die Haftung von Kunststoffen bzw. Polymeren gegenüber der unbehandelten Aluminiumoberfläche des Kernbereichs. In dem ersten Oberflächenbereich 3 ist eine gasdichte Verbindung mit der Umhüllung 14 ausgebildet.

Die Umhüllung 14 ist am unteren Ende umgeschlagen und weist an ihrem rechten und linken Rand je einen Saum auf. Dort ist das Umhüllungsmaterial stoffschlüssig verbunden.

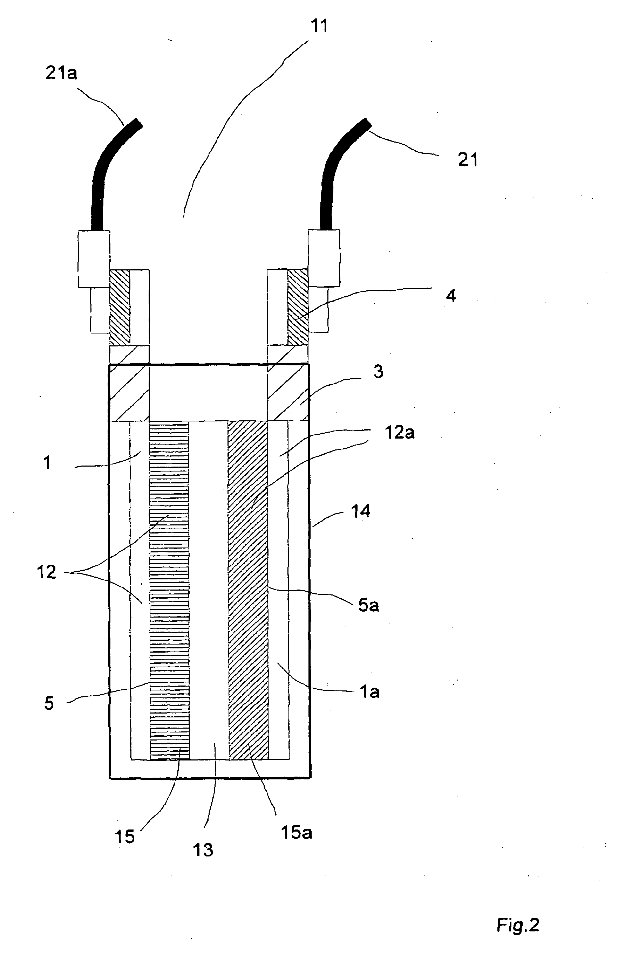

Fig. 2 zeigt einen Schnitt durch eine erfindungsgemäße galvanische Zelle 11. Diese ist um die Zuleitungen 21 bzw. 21a ergänzt. Die Darstellung ist nicht maßstabsgetreu. Insbesondere wurde auf die Dickenverhältnisse zwischen den einzelnen Bauteilen keine Rücksicht genommen.

Die galvanische Zelle 11 weist zwei Elektroden 12, 12a, einen Elektrolyt 13 und eine Umhüllung 14 auf. Eine Elektrode 12,. 12a weist jeweils einen Stromableiter 1, 1 a sowie je eine aktive Elektrodenmasse 15, 15a auf. Ein Stromableiter 1, 1 a und die jeweils zugeordnete aktive Elektrodenmasse sind elektrisch leitend verbunden. Bei den Stromableitern 1, 1a handelt es sich um erfindungsgemäße Stromableiter. Diese Stromableiter weisen je einen ersten Oberflächenbereich 3 zur stoffschlüssigen und gasdichten Verbindung mit der Umhüllung 14 auf. Weiter weist ein Stromableiter 1, 1 a einen zweiten Oberflächenbereich 4 zur Verbindung mit dem Stromkabel 21 auf. Ebenfalls markiert sind die Kontaktbereiche 5, 5a der Stromableiter 1,. 1 a zur elektrischen Kontaktierung mit den aktiven Elektrodenmassen 15, 15a. Zwischen den Elektroden 12, 12a bzw. den aktiven Elektrodenmassen 15, 15a ist der Elektrolyt 13 angeordnet. Dieser weist Lithium-Ionen auf.

Die Umhüllung 14 dieses Ausführungsbeispiels ist als Aluminiumfolie ausgebildet. Die Innenseiten dieser Umhüllung 14 sind den Stromableitern 1, 1a zugewandt. Die Innenseiten der Umhüllung 14 sind durchgängig mit Polypropylen beschichtet. Zur Verbesserung der Haftung der Umhüllung 14 mit dem ersten Oberflächenbereich 3 ist die Polypropylenschicht auf der Innenseite der Umhüllung 14 mit polaren Kohlenstoff-Sauerstoff-Gruppen versehen. Zur Haftverbesserung erfolgt eine Oxidation der PP-Schicht beispielsweise mittels Plasmaentladung. Weiter weist die Umhüllung 14 eine äußere schützende Schicht aus PVC auf. Bei einem scharfkantigen Stromableiter ist ein dünnwandiger nachgiebiger Polymerstreifen, vorzugsweise aus Polypropylen und/oder Polyethylen, zwischen Umhüllung 14 und erstem Oberflächenbereich 3 des Stromableiters 1, 1a eingebracht. Dieser dient der Abrundung der scharfen Kante und schont auch die Umhüllung.

## Patentansprüche

1. Galvanische Zelle (11) mit wenigstens einer Elektrode (12, 12a), einem Elektrolyt (13) und einer Umhüllung (14), wobei
a) die Elektrode (12, 12a) wenigstens einen Stromableiter (1) und eine aktive Elektrodenmasse (15, 15a) aufweist,
b) der Stromableiter (1)
b1) wenigstens einen ersten Oberflächenbereich (3) mit wenigstens einem ersten Werkstoff und einen zweiten Oberflächenbereich (4) mit wenigstens einem zweiten, von dem ersten Werkstoff verschiedenen Werkstoff und
b2) einen plattenförmigen Kernbereich (2) mit wenigstens einem elektrisch leitfähigen dritten, von dem ersten und dem zweiten Werkstoff verschiedenen Werkstoff aufweist, und wobei
c) die elektrische Leitfähigkeit des ersten Oberflächenbereichs (3) geringerer ist, als die des zweiten Oberflächenbereichs (4), und wobei der erste Oberflächenbereich (3) von dem zweiten Oberflächenbereich (4) abgegrenzt ist,
d) die Umhüllung (14) als dünnwandige Folie ausgebildet und wenigstens teilweise mit dem ersten Oberflächenbereich (3) des Stromableiters (1) verbunden ist und
e) die Umhüllung (14) wenigstens eine gasdichte erste Schicht aufweist, welche wenigstens teilweise mit einem vierten elektrisch nicht leitenden Werkstoff beschichtet ist, welcher auch polare Gruppen aufweist, die wenigstens in der Nähe des ersten Bereichs (3) des Stromableiters (1) angeordnet sind,
**dadurch gekennzeichnet, dass** der erste Werkstoff in der nachfolgenden Gruppe enthalten ist, welche Siliziumverbindungen und Zirkonflourid umfasst.

2. Galvanische Zelle (11) nach Anspruch 1, **dadurch gekennzeichnet, dass** die wenigstens eine gasdichte erste Schicht der Umhüllung (14) metallisch ausgebildet ist, dass der vierte Werkstoff vorzugsweise auf der Innenseite der Umhüllung (14) angeordnet und bevorzugt ein Polymer, besonders bevorzugt PE und/oder PP ist, und dass vorzugsweise die Umhüllung auf ihrer Außenseite eine Schutzschicht aufweist.

3. Galvanische Zelle (11) nach einem der vorhergehenden Ansprüche, **dadurch gekennzeichnet, dass** der vierte Werkstoff Kohlenstoff-Sauerstoff-Gruppen aufweist.

4. Galvanische Zelle nach einem der vorhergehenden Ansprüche, **dadurch gekennzeichnet, dass** der zweite Werkstoff ein Metall ist, vorzugsweise Nickel, Gold, Platin oder ein anderes Edelmetall.

5. Galvanische Zelle nach einem der vorhergehenden Ansprüche, **dadurch gekennzeichnet, dass** der erste Oberflächenbereich (3) und der zweite Oberflächenbereich (4) je als Schicht mit einer Schichtdicke ausgebildet ist, die geringer als die Dicke des Kernbereichs (2) ist und vorzugsweise weniger als 1/10 der Dicke des Kernbereichs (2) beträgt.

6. Galvanische Zelle nach einem der vorhergehenden Ansprüche, **dadurch gekennzeichnet, dass** dieser dritte Werkstoff ein Metall, vorzugsweise Aluminium und/oder Kupfer ist, wobei der Gewichtsanteil des dritten Werkstoffs am Kernbereich (2) wenigstens 20 Gew.-%, bevorzugt wenigstens 50 Gew.-%, besonders bevorzugt wenigstens 90 Gew.-%, besonders bevorzugt wenigstens 95 Gew.-%, besonders bevorzugt wenigstens 99,5 Gew.-% und bevorzugt höchstens 99,995 Gew.-% beträgt.

7. Galvanische Zelle nach einem der vorhergehenden Ansprüche, **dadurch gekennzeichnet, dass** der Gewichtsanteil des zweiten Werkstoffs am zweiten Oberflächenbereich (4) wenigstens 20 Gew.-%, bevorzugt wenigstens 50 Gew.-%, besonders bevorzugt wenigstens 90 Gew.-%, besonders bevorzugt wenigstens 95 Gew.-%, besonders bevorzugt wenigstens 99,5 Gew.-% und bevorzugt höchstens 99,995 Gew.-% beträgt.

8. Galvanische Zelle nach einem der vorhergehenden Ansprüche, **dadurch gekennzeichnet, dass** der Stromableiter (1) weiter wenigstens einen Kontaktbereich (5) aufweist.

9. Galvanische Zelle (11) nach einem der vorhergehenden Ansprüche,
**dadurch gekennzeichnet, dass**
die aktive Elektrodenmasse (15, 15a) auf dem Kontaktbereich (5) des Stromableiters angeordnet ist, und
dass die aktive Elektrodenmasse (15, 15a) mit dem Kontaktbereich (5) wenigstens elektrisch leitend verbunden ist.

10. Galvanische Zelle (11) nach einem der vorhergehenden Ansprüche, **dadurch gekennzeichnet, dass** der Stromableiter (1) sich wenigstens teilweise aus der Umhüllung (14) erstreckt, wobei sich vorzugsweise der zweite Bereich (4) aus der Umhüllung (14) erstreckt.

11. Galvanische Zelle (11) nach einem der vorhergehenden Ansprüche,
**dadurch gekennzeichnet, dass** die äußere Form der galvanischen Zelle (11) an eine weitere galvanische Zelle angepasst ist, wobei die äußere Form der galvanischen Zelle (11) vorzugsweise im wesentlichen quaderförmig ist,
dass der Kernbereich (2) des Stromableiters (1) an die äußere Form der galvanischen Zelle (11) angepasst ist, wobei der Stromableiter (1) vorzugsweise im wesentlichen quaderförmig ausgebildet ist und dass die Umhüllung (14) an die Gestalt des Stromableiters (1) angepasst ist.

12. Galvanische Zelle (11) nach einem der vorhergehenden Ansprüche, **dadurch gekennzeichnet, dass** die äußere Form der galvanischen Zelle (11) im wesentlichen zylindrisch ist,
dass der Stromableiter (1) spiralförmig angeordnet ist, wobei die Längsachsen der galvanischen Zelle (11) und des spiralförmigen Stromableiters (1) im wesentlichen parallel angeordnet sind.

13. Galvanische Zelle (11) nach einem der vorhergehenden Ansprüche, **dadurch gekennzeichnet, dass** der Elektrolyt (13) wenigstens zeitweise ein Alkalimetall, vorzugsweise Lithium aufweist.

## Claims

1. A galvanic cell (11) comprising at least one electrode (12, 12a), an electrolyte (13) and a casing (14), wherein
a) the electrode (12, 12a) has at least one current conductor (1) and one active electrode mass (15, 15a),
b) the current conductor (1) comprises
b1) at least one first surface area (3) of at least one first material and one second surface area (4) of at least one second material different from the first material, and
b2) a plate-shaped core region (2) of at least one electrically conductive third material different from the first and second material, and wherein
c) the electrical conductivity of the first surface area (3) is lower than that of the second surface area (4), and wherein the first surface area (3) is delimited from the second surface area (4),
d) the casing (14) is configured as a thin-walled film and is at least partially connected to the first surface area (3) of the current conductor (1), and
e) the casing (14) comprises at least one gas-tight first layer which is at least partially coated with a fourth electrically non-conductive material which also comprises polar groups which are at least partially arranged in the proximity of the first area (3) of the current conductor (1),
**characterized in that** the first material is from the following group consisting of silicon compounds and zirconium fluoride.

2. The galvanic cell (11) according to claim 1, **characterized in that** the at least one gas-tight first layer of the casing (14) is of metallic configuration, that the fourth material is preferably disposed on the inner side of the casing (14) and is preferentially a polymer, particularly preferentially polyethylene and/or polypropylene, and that the casing preferably has a protective layer on its outer side.

3. The galvanic cell (11) according to one of the preceding claims, **characterized in that** the fourth material comprises carbon-oxygen groups.

4. The galvanic cell according to any one of the preceding claims, **characterized in that** the second material is a metal, preferably nickel, gold, platinum or another noble metal.

5. The galvanic cell according to any one of the preceding claims, **characterized in that** the first surface area (3) and the second surface area (4) are each configured as a layer having a layer thickness which is less than the thickness of the core region (2) and preferably less than 1/10 of the thickness of the core region (2).

6. The galvanic cell according to any one of the preceding claims, **characterized in that** the third material is a metal, preferably aluminum and/or copper, wherein the weight percentage of the third material of the core region (2) amounts to at least 20% by weight, preferentially at least 50% by weight, particularly preferentially at least 90% by weight, particularly preferentially at least 95% by weight, particularly preferentially at least 99.5% by weight, and most particularly preferentially at most 99.995% by weight.

7. The galvanic cell according to any one of the preceding claims, **characterized in that** the weight percentage of the second material of the second surface area (2) amounts to at least 20% by weight, preferentially at least 50% by weight, particularly preferentially at least 90% by weight, particularly preferentially at least 95% by weight, particularly preferentially at least 99.5% by weight, and most particularly preferentially at most 99.995% by weight.

8. The galvanic cell according to any one of the preceding claims, **characterized in that** the current conductor (1) further comprises at least one contact area (5).

9. The galvanic cell (11) according to any one of the preceding claims, **characterized in that** the active electrode mass (15, 15a) is arranged on the contact area (5) of the current conductor, and
that the active electrode mass (15, 15a) is in at least electrically conductive connection with the contact area (5).

10. The galvanic cell (11) according to any one of the preceding claims, **characterized in that** the current conductor (1) extends at least partially from the casing (14), wherein preferably the second area (4) extends from the casing (14).

11. The galvanic cell (11) according to any one of the preceding claims, **characterized in that** the outer shape of the galvanic cell (11) is adapted to a further galvanic cell, wherein the outer shape of the galvanic cell (11) is preferably substantially box-shaped,
that the core region (2) of the current conductor (1) is adapted to the outer shape of the galvanic cell (11), wherein the current conductor (1) is preferably of substantially box-shaped configuration and that the casing (14) is adapted to the form of the current conductor (1).

12. The galvanic cell (11) according to any one of the preceding claims, **characterized in that** the outer shape of the galvanic cell (11) is substantially cylindrical,
that the current conductor (1) has a helical disposition, wherein the longitudinal axes of the galvanic cell (11) and the helical current conductor (1) are of substantially parallel arrangement.

13. The galvanic cell (11) according to any one of the preceding claims, **characterized in that** the electrolyte (13) at least intermittently comprises an alkali metal, preferably lithium.

## Revendications

1. Cellule galvanique (11) comprenant au moins une électrode (12, 12a), un électrolyte (13) et une enveloppe (14), où
a) l'électrode (12, 12a) comporte au moins un collecteur de courant (1) et une masse d'électrode active (15, 15a),
b) le collecteur de courant (1) comporte
b1) au moins une première partie de surface (3) avec au moins un premier matériau et une deuxième partie de surface (4) avec au moins un deuxième matériau, différent du premier matériau, et
b2) une partie centrale (2) en forme de plaque, avec au moins un troisième matériau électriquement conducteur, différent du premier et du deuxième matériaux, et où
c) la conductivité électrique de la première partie de surface (3) est inférieure à celle de la deuxième partie de surface (4), et la première partie de surface (3) est isolée de la deuxième partie de surface (4),
d) l'enveloppe (14) est réalisée comme feuille à paroi mince et elle est au moins partiellement raccordée à la première partie de surface (3) du collecteur de courant (1), et
e) l'enveloppe (14) présente au moins une première couche étanche aux gaz, laquelle est au moins partiellement revêtue d'un quatrième matériau non conducteur électrique comportant également des groupes polaires disposés au moins à proximité de la première partie (3) du collecteur de courant (1),
**caractérisée en ce que** le premier matériau est contenu dans le groupe comprenant des composés de silicium et le fluorure de zirconium.

2. Cellule galvanique (11) selon la revendication 1, **caractérisée en ce que** la ou les premières couches étanches aux gaz de l'enveloppe (14) sont métalliques, **en ce que** le quatrième matériau est préférentiellement disposé sur la face intérieure de l'enveloppe (14) et est de préférence un polymère, tout particulièrement un PE et/ou un PP, et **en ce que** l'enveloppe présente préférentiellement une couche de protection sur sa face extérieure.

3. Cellule galvanique (11) selon l'une des revendications précédentes, **caractérisée en ce que** le quatrième matériau comporte des groupes carbone-oxygène.

4. Cellule galvanique selon l'une des revendications précédentes, **caractérisée en ce que** le deuxième matériau est un métal, préférentiellement du nickel, de l'or, du platine ou un autre métal noble.

5. Cellule galvanique selon l'une des revendications précédentes, **caractérisée en ce que** la première partie de surface (3) et la deuxième partie de surface (4) sont réalisées chacune comme couche présentant une épaisseur de couche inférieure à l'épaisseur de la partie centrale (2), de préférence inférieure à 1/10^{e} de l'épaisseur de la partie centrale (2).

6. Cellule galvanique selon l'une des revendications précédentes, **caractérisée en ce que** le troisième matériau est un métal, préférentiellement de l'aluminium et/ou du cuivre, la part du troisième matériau dans la partie centrale (2) étant d'au moins 20 % en poids, avantageusement d'au moins 50 % en poids, particulièrement avantageusement d'au moins 90 % en poids, préférentiellement d'au moins 95 % en poids, tout particulièrement d'au moins 99,5 % en poids et de préférence au maximum de 99,995 % en poids.

7. Cellule galvanique selon l'une des revendications précédentes, **caractérisée en ce que** la part du deuxième matériau dans la deuxième partie de surface (4) est d'au moins 20 % en poids, avantageusement d'au moins 50 % en poids, particulièrement avantageusement d'au moins 90 % en poids, préférentiellement d'au moins 95 % en poids, tout particulièrement d'au moins 99,5 % en poids et de préférence au maximum de 99,995 % en poids.

8. Cellule galvanique selon l'une des revendications précédentes, **caractérisée en ce que** le collecteur de courant (1) présente en outre au moins une partie de contact (5).

9. Cellule galvanique (11) selon l'une des revendications précédentes, **caractérisée en ce que**
la masse d'électrode active (15, 15a) est disposée sur la partie de contact (5) du collecteur de courant, et
**en ce que** la masse d'électrode active (15, 15a) est reliée de manière au moins électriquement conductrice à la partie de contact (5).

10. Cellule galvanique (11) selon l'une des revendications précédentes, **caractérisée en ce que** le collecteur de courant (1) s'étend au moins partiellement hors de l'enveloppe (14), la deuxième partie (4) s'étendant préférentiellement hors de l'enveloppe (14).

11. Cellule galvanique (11) selon l'une des revendications précédentes, **caractérisée en ce que** la forme extérieure de la cellule galvanique (11) est ajustée à celle d'une autre cellule galvanique, la forme extérieure de la cellule galvanique (11) étant préférentiellement sensiblement parallélépipédique,
**en ce que** la partie centrale (2) du collecteur de courant (1) est ajustée à la forme extérieure de la cellule galvanique (11), le collecteur de courant (1) étant prévu préférentiellement avec une forme sensiblement parallélépipédique, et **en ce que** l'enveloppe (14) est ajustée à la forme du collecteur de courant (1).

12. Cellule galvanique (11) selon l'une des revendications précédentes, **caractérisée en ce que** la forme extérieure de la cellule galvanique (11) est sensiblement cylindrique,
**en ce que** le collecteur de courant (1) est disposé en spirale, les axes longitudinaux de la cellule galvanique (11) et du collecteur de courant (1) en spirale étant sensiblement parallèles.

13. Cellule galvanique (11) selon l'une des revendications précédentes, **caractérisée en ce que** l'électrolyte (13) comprend au moins temporairement un métal alcalin, préférentiellement du lithium.
